# EUROPEAN PATENT SPECIFICATION

(11) **EP 3 734 111 B1**
(45) Date of publication and mention of the grant of the patent: **17.04.2024**
(21) Application number: 18896529.7
(22) Date of filing: 19.12.2018
(51) Int. Cl.: F16G 1/28

(54) **DOUBLE-SIDED TOOTHED BELT**
DOPPELSEITIGER ZAHNRIEMEN
COURROIE CRANTÉE À DOUBLE FACE

(30) Priority: 26.12.2017 JP 2017249346; 11.12.2018 JP 2018231301
(43) Date of publication of application: 04.11.2020
(73) Proprietor: Mitsuboshi Belting Ltd., Kobe-shi, Hyogo 653-0024 (JP)
(72) Inventor: TAMURA Eiki, Kobe-shi, Hyogo 653-0024 (JP)
(74) Representative: Hoffmann Eitle
(86) International application number: PCT/JP2018/046882
(87) International publication number: WO 2019/131407

(56) References cited:
- FR-A- 1 453 786
- JP-A- S62 155 354
- JP-A- 2005 319 716
- JP-U- S59 127 946
- JP-U- S59 154 506
- US-A1- 2011 070 989

## Description

### TECHNICAL FIELD

The present invention relates to improvement of a double-side-toothed belt.

### BACKGROUND ART

A double-side-toothed belt having tooth portions on its both sides has a configuration in which inner tooth portions and outer tooth portions are provided along a longitudinal direction of the belt at predetermined pitches, and a tension member is placed between the inner tooth portions and the outer tooth portions, while both the inner and outer tooth portions and tooth bottom portions in inner and outer circumferences are covered with a tooth cloth. Different pulleys mesh with the inner tooth portions and the outer tooth portions of the double-side-toothed belt respectively so that a drive force can be transmitted from a driving pulley to a plurality of pulleys.

For example, a typical one of double-side-toothed belts conventionally systematized in the market is disclosed in FIG. 1 of JP S58 40642 U. In this double-side-toothed belt, inner tooth portions and outer tooth portions having substantially the same shape are disposed at predetermined pitches in a longitudinal direction of the belt respectively. The inner tooth portions and the outer tooth portions are arranged at the same arrangement pitch, and the inner tooth portions and the outer tooth portions are positioned at the same positions in the longitudinal direction of the belt. That is, the inner tooth portions and the outer tooth portions have a positional relationship in which they are opposed to each other through a tension member.

In such a typical double-side-toothed belt in which the inner tooth portions and the outer tooth portions arranged on the inner and outer circumferential surfaces of the belt have the same shape and the same dimensions, the magnitude of power (referred to as transmission capacity) transmitted per tooth portion in the inner circumference is equal to that in the outer circumference. However, there is a concern that such a belt is hardly applied to a synchronous transmission belt system in which transmission systems in the inner and outer circumferences have different loads or functions respectively in accordance with intended purposes. In order to solve this problem, a belt in which the pitch of tooth portions and the dimensions of each tooth portion differ between inner and outer circumferences has been proposed.

For example, a double-side-toothed belt in which the pitch of inner tooth portions is larger than the pitch of outer tooth portions and the inner tooth portions are larger than the outer tooth portions is disclosed in FIG. 2 of JP S58 40642 U. Owing to the difference in pitch between the inner tooth portions and the outer tooth portions, the positions of the inner tooth portions and the positions of the outer tooth portions do not always coincide in the longitudinal direction of the belt. On the other hand, JP H10 132032 A discloses a double-side-toothed belt in which the pitch of outer tooth portions is larger than the pitch of the inner tooth portions, and the outer tooth portions are larger than the inner tooth portions. Also in the belt of JP H10 132032 A, the positions of the inner tooth portions and the positions of the outer tooth portions do not always coincide in the longitudinal direction of the belt.
Further known examples of double-sided toothed belts are derivable from JP S59 127946 A, which forms basis for the preamble of the two-part form of claim 1, FR 1453786 A and US 2011/070989 A1.

### SUMMARY OF INVENTION

### TECHNICAL PROBLEM

However, in the belt as disclosed in FIG. 2 of JP S5840642 U or JP H10 132032 A, the bending rigidity of the belt increases as a whole because the positions of the inner tooth portions and the positions of the outer tooth portions do not always coincide in the longitudinal direction of the belt. Accordingly, when the belt is wound on pulleys, meshing between the belt and each pulley is so poor that vibration in the belt caused by the meshing between the belt and pulley increases. Thus, there is a concern that the belt may deteriorate in an early stage.

In JP H10 132032 A, a difference in rubber hardness of tooth portions is provided between the inner circumference and the outer circumference of the belt to thereby inhibit the aforementioned problem from occurring. However, this may be insufficient as a solution to the problem. In addition, since it is essential to provide the difference in rubber hardness between the inner circumference and the outer circumference, there is a demerit that the number of steps in the manufacturing stage increases to thereby increase the manufacturing cost.

An object of the present invention is to provide a double-side-toothed belt capable of providing a difference in transmission capacity between the inner circumference and the outer circumference of the belt while making the positions of inner tooth portions and the positions of outer tooth portions coincide in a longitudinal direction of the belt.

### SOLUTION TO PROBLEM

The above-described objects are solved by means of a double-side-toothed belt according to independent claim 1. A distinct embodiment is derivable from claim 2.

A double-side-toothed belt according to the present invention includes:
a plurality of inner tooth portions arranged on an inner circumferential side of the belt at a predetermined pitch in a longitudinal direction of the belt; and
a plurality of outer tooth portions arranged on an outer circumferential side of the belt at a predetermined pitch in the longitudinal direction of the belt, in which
the pitch of the inner tooth portions and the pitch of the outer tooth portions are equal to each other, and positions of the inner tooth portions and positions of the outer tooth portions coincide in the longitudinal direction of the belt, wherein
a hardness of a rubber forming the inner tooth portions and a hardness of a rubber forming the outer tooth portions are equal to each other,
the inner tooth portions have side faces of flat faces and the outer tooth portions have side faces each of which is a curved face including a circular arc face bulging outward,
the outer tooth portions have a transmission capacity higher than a transmission capacity of the inner tooth portions, and
the side faces of each outer tooth portion are respectively connected through a flat face.

According to the aforementioned configuration, in the double-side-toothed belt, the tooth shape of the inner tooth portions is not similar to the tooth shape of the outer tooth portions, so that a meshing state of the tooth portions and a pulley differs between the inner circumference and the outer circumference of the belt. Therefore, not only durability of the tooth portions but also transmission capacity differ between the inner circumference and the outer circumference.

In addition, the tooth pitch of the inner tooth portions and the tooth pitch of the outer tooth portions are equal to each other, and the positions of the inner tooth portions and the positions of the outer tooth portions coincide in the longitudinal direction of the belt. The phrase "pitch of the tooth portions" means an arrangement interval (an interval between center lines of tooth portions adjacent to each other in the longitudinal direction of the belt) of the tooth portions along a pitch line (a center line of a tension member) of the belt. The phrase "the positions of the inner tooth portions and the positions of the outer tooth portions coincide in the longitudinal direction of the belt" means that the center lines of the inner tooth portions and the center lines of the outer tooth portions coincide in the longitudinal direction of the belt. When the misalignment between the center lines of the inner tooth portions and the center lines of the outer tooth portions in the longitudinal direction of the belt is in a range of less than 5% of the tooth pitch, the positions of the inner tooth portions and the positions of the outer tooth portions in the longitudinal direction of the belt may be regarded as coincident with each other. In this configuration, the positions of tooth bottom portions, each of which is a part between the tooth portions, in the inner circumference and those in the outer circumference also inevitably coincide in the longitudinal direction of the belt. Thus, the bending rigidity of the belt decreases as a whole. Accordingly, the flexibility of the belt is improved so that the belt can be wound on pulleys flexibly. Thus, the belt can mesh with the pulleys smoothly when the belt transmits power. As a result, the vibration in the belt caused by the meshing between the belt and pulley can be reduced to prevent the belt from deteriorating easily, and thus the durability of the belt can be improved.

That is, when the double-side-toothed belt having the aforementioned configuration is used, it is possible to apply the belt to a synchronous transmission belt system having different transmission capacities in inner and outer circumferences of the belt while securing the meshing performance between the belt and pulley during power transmission and the durability of the belt.

According to the aforementioned configuration, side faces of tooth portions of each pulley come in contact with side faces of the tooth portions of the belt so as to transmit power. Accordingly, by making side face shape of the tooth portions of the inner circumference and the outer circumference of the belt different from each other, not only a difference in meshing state with each pulley but a difference in transmission capacity can be provided between the inner tooth portions and the outer tooth portions. In the present invention, the phrase "side faces of tooth portions" means side faces of tooth portions in the longitudinal direction of the belt.

According to the aforementioned configuration, since a shape of side faces of either the inner tooth portions or the outer tooth portions may be flat faces while a shape of side faces of the other tooth portions may be curved faces, the meshing state with pulleys in the inner tooth portions can be made different from the meshing state with pulleys in the outer tooth portions.

According to the aforementioned configuration, since the side faces of the other tooth portions are convex curved faces bulging outward, the other tooth portions mesh with tooth portions of each pulley smoothly. Accordingly the bending fatigue resistance of a tension member is improved in running of the belt. In addition, a stress from the pulley meshing with the other tooth portions is hardly concentrated on tooth root portions in the other tooth portions. Thus, a shearing stress on the tooth portions can be reduced to improve the durability of the tooth portions.

In addition, owing to the smooth meshing of the other tooth portions and the pulley, tooth skipping hardly occurs in the other tooth portions.

In addition, owing to the smooth meshing of the other tooth portions and the pulley, vibration on the other tooth portion side of the belt is so small that, on the other tooth portion side of the belt, the silence is enhanced, the velocity unevenness is reduced, and positioning with high accuracy can be attained. From above, the transmission capacity in the other tooth portions of the belt can be enhanced.

Further, owing to the smooth meshing of the other tooth portions and the pulley, the other tooth portions have large transmission capacity. Accordingly, power can be transmitted even if the number of teeth meshing between the other tooth portions of the belt and the pulley is reduced. Thus, the pulley meshing with the other tooth portions of the belt may have a small diameter, and it is possible to save the space and reduce the cost.

According to the aforementioned configuration, since the outer tooth portions have tooth shapes with high transmission capacity, power can be transmitted even if the number of teeth meshing between the pulley meshing with the outer tooth portions and the outer tooth portions is reduced.

According to the aforementioned configuration, since the hardness of the rubber forming the inner tooth portions of the belt and the hardness of the rubber forming the outer tooth portions of the belt are equal to each other, one kind of rubber is prepared for manufacturing the belt. It is therefore possible to suppress the number of steps in the stage of manufacturing the belt, so that the manufacturing cost of the belt can be suppressed.

On this occasion, each of the side faces of the other tooth portions may have a face shape in which a plurality of circular arc faces are combined.

### ADVANTAGEOUS EFFECTS OF INVENTION

As described above, in the present invention, it is possible to provide a double-side-toothed belt capable of providing a difference in transmission capacity between the inner circumference and the outer circumference of the belt while making the positions of inner tooth portions and the positions of outer tooth portions coincide in a longitudinal direction of the belt.

### BRIEF DESCRIPTION OF DRAWINGS

[FIG. 1] FIG. 1 is a schematic configuration view of a belt system of the present invention.
[FIG. 2] FIG. 2 is a partially enlarged sectional view of a double-side-toothed belt of an embodiment of the present invention, on a section including a longitudinal direction of the belt.
[FIG. 3] FIG. 3 is a partially enlarged view of FIG. 2.
[FIG. 4] FIG. 4 is a view of a configuration example of the belt system, illustrating that the configuration of (a) of FIG. 4 can be changed to the configuration of (b) or (c) of FIG. 4 by an application of the present invention.
[FIG. 5] FIG. 5 is a view of another configuration example of the belt system, illustrating that the configuration of (a) of FIG. 5 can be changed to the configuration of (b) of FIG. 5 by an application of the present invention.
[FIG. 6] FIG. 6 is a partially enlarged sectional view of a double-side-toothed belt of a modification of the present embodiment, on a section including a longitudinal direction of the belt.
[Fig. 7] FIG. 7 is a view showing a configuration example of the belt system, illustrating that the configuration of (a) of FIG. 7 can be changed to the configuration of (b) of FIG. 7 by an application of the present invention.
[FIG. 8] FIG. 8 is a partially enlarged sectional view of a double-side-toothed belt of Comparative Example 1, on a section including a longitudinal direction of the belt.
[FIG. 9] FIG. 9 is a partially enlarged sectional view of a double-side-toothed belt of Comparative Example 2, on a section including a longitudinal direction of the belt.

### DESCRIPTION OF EMBODIMENT

A belt system 1 and a double-side-toothed belt 6 of an embodiment of the present invention will be described below by way of example.

### (Belt System 1)

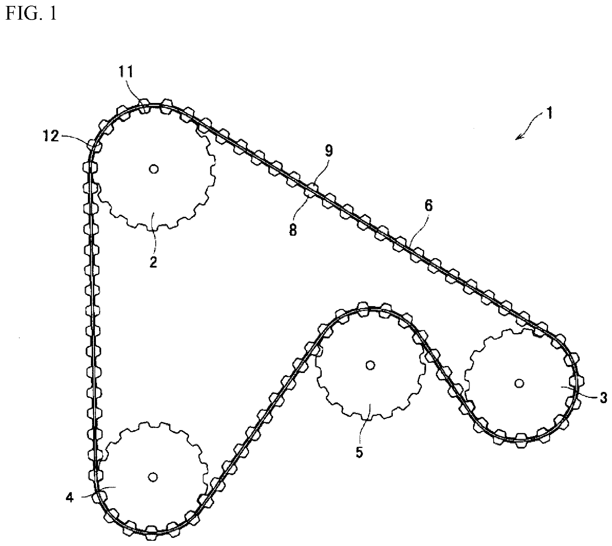

The belt system 1 of the present embodiment is applied to a belt system provided in a general industrial machine. As shown in FIG. 1, the belt system 1 is constituted by a plurality of pulleys 2 to 5, and a double-side-toothed belt 6. The single double-side-toothed belt 6 is wound on the plurality of pulleys 2 to 5. The driving timing pulley 2, the idle timing pulley 3 and the driven timing pulley 4 are disposed on the inner circumferential side of the belt system 1, and the driven timing pulley 5 is disposed on the outer circumferential side of the belt system 1. As shown in FIGs. 1 to 3, the double-side-toothed belt 6 has a plurality of inner tooth portions 8 arranged on the inner circumferential side of the belt 6 along a longitudinal direction of the belt, and a plurality of outer tooth portions 9 arranged on the outer circumferential side of the belt along the longitudinal direction of the belt.

As shown in FIG. 1, in the belt system 1 which is transmitting power, tooth grooves 11 of the pulleys 2 to 5 mesh with tooth portions 8 and 9 of the double-side-toothed belt 6, and side faces 12 of tooth portions of the pulleys 2 to 5 come into contact with side faces 82 and 92 of the tooth portions 8 and 9 of the belt 6 so as to transmit power from the pulley 2 to the pulleys 4 and 5. That is, the belt system 1 of the present embodiment is a synchronous transmission belt system. The tooth grooves 11 of the pulleys 2 to 4 mesh with the inner tooth portions 8 of the double-side-toothed belt 6, and the tooth grooves 11 of the pulley 5 mesh with the outer tooth portions 9 of the double-side-toothed belt 6.

### (Double-Side-Toothed Belt 6)

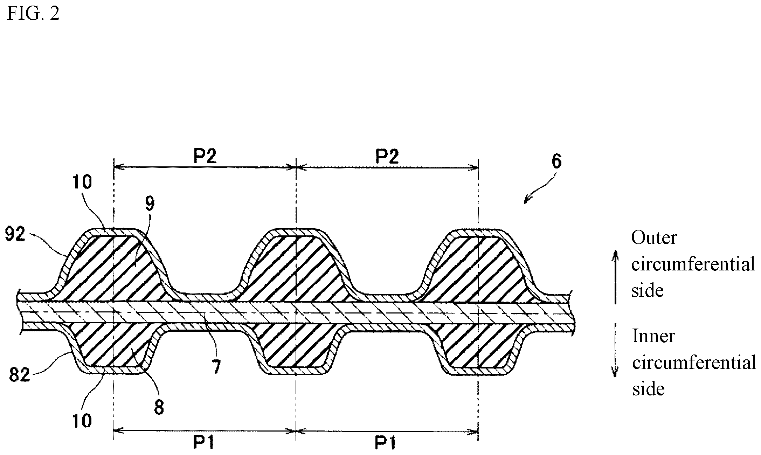

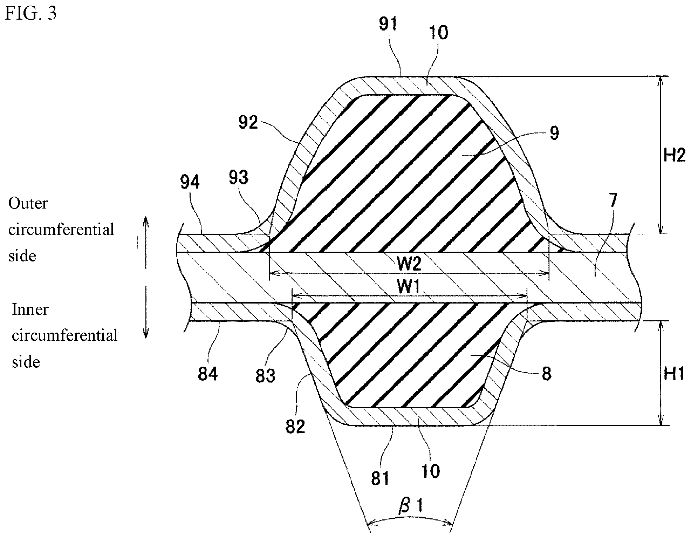

As shown in FIGs. 2 and 3, the double-side-toothed belt 6 of the present invention is an endless belt, which includes a tension member 7 buried in a body part of the belt 6, a plurality of inner tooth portions 8 arranged on the inner circumferential side of the belt 6 at a pitch P1 along a longitudinal direction of the belt, a plurality of outer tooth portions 9 arranged on the outer circumferential side of the belt 6 at a pitch P2 along the longitudinal direction of the belt, and a tooth cloth 10 covering the inner tooth portions 8 and the outer tooth portions 9. The pitch P1 of the inner tooth portions 8 and the pitch P2 of the outer tooth portions 9 are equal to each other, and the positions of the inner tooth portions 8 and the positions of the outer tooth portions 9 coincide in the longitudinal direction of the belt. That is, the inner tooth portions 8 and the outer tooth portions 9 have a positional relationship in which they are opposed to each other through the tension member 7. In addition, positions of tooth bottom portions 84 and 94, which are parts between the tooth portions 8 and parts between the tooth portions 9 respectively, also coincide in the longitudinal direction of the belt.

### (Tension Member 7)

As shown in FIGs. 2 and 3, the tension member 7 is buried in the body part of the double-side-toothed belt 6 so as to be located near the center of the belt 6 in a thickness direction of the belt. The tension member 7 is a member in which filaments of E-glass or high-strength glass with a diameter of 5 to 9 µm have been twisted and then treated with an RFL solution or the like which is a protective agent or a bonding agent made of a rubber compound. The tension member 7 may be another member other than the above. A twisted cord in which filaments of 0.5 to 2.5 denier of para-aramid fibers (tradename: Kevlar or Technora) small in elongation against a stress and large in tensile strengths for organic fibers have been twisted and then treated with a bonding agent of an RFL solution, an epoxy solution, an isocyanate solution and a rubber compound may be used. In addition, the wire diameter of the tension member 7 is, for example, about 0.8 mm.

### (Inner Tooth Portions 8 and Outer Tooth Portions 9)

Both the inner tooth portions 8 and the outer tooth portions 9 are formed of a rubber material having chloroprene rubber or the like as its main component. In addition, in the present embodiment, the rubber forming the inner tooth portions 8 and the rubber forming the outer tooth portions 9 have the same components and also have equal hardness. For example, the rubber hardness is about 75 in durometer A hardness according to JIS K6253: 2012. The shapes of the inner tooth portions 8 and the outer tooth portions 9 will be described in detail later.

### (Tooth Cloth 10)

As shown in FIGs. 2 and 3, the tooth cloth 10 covers the whole surfaces of the inner tooth portions 8 and the outer tooth portions 9 so as to follow the shape of the double-side-toothed belt 6. In the present embodiment, a canvas having a fabric configuration of twill-woven fabric using nylon 6 as warps (in the width direction of the belt) and woolly nylon 6 as wefts (in the longitudinal direction of the belt) is used as the tooth cloth 10. Urethane elastic yarns having elasticity are used as a part of the wefts. The aforementioned canvas subjected to a dip treatment with an RFL solution is used as the tooth cloth 10. The thickness of the tooth cloth 10 is, for example, about 0.2 mm. The tooth cloth 10 is not limited to the aforementioned cloth. The canvas used as the tooth cloth 10 may be formed of polyester yarns, aramid yarns, etc., and one of them or a mixture of them may be used.

### (Tooth Shapes of Inner Tooth Portions 8 and Outer Tooth Portions 9)

As shown in FIGs. 2 and 3, there is a difference in tooth shape between the inner tooth portions 8 and the outer tooth portions 9. Specifically, in the present embodiment, side face shapes of the tooth portions 8 and 9 of the belt 6 which will touch side faces 12 of the tooth grooves 11 of the pulleys 2 to 5 are made different between the inner tooth portions 8 and the outer tooth portions 9. Side faces 82 of the inner tooth portions 8 are formed into flat faces, and side faces 92 of the outer tooth portions 9 are formed into curved faces. The tooth shapes of the inner tooth portions 8 and the outer tooth portions 9 will be described in detail below.

### (Tooth Shape of Inner Tooth Portion 8)

As shown in FIGs. 2 and 3, the tooth shape of each inner tooth portion 8 is a shape called a T-tooth type having a trapezoidal shape in section. Each inner tooth portion 8 has a shape in which two side faces made of flat faces respectively are connected through a flat face. A tooth tip portion 81 at the tip of the inner tooth portion 8 has a flat face, and the two side faces 82 are both flat. A tooth root portion 83 of the inner tooth portion 8 is connected to a tooth bottom portion 84 through a curved face having a fixed curvature. Incidentally, a ridge line between the tooth tip portion 81 and each side face 82 in the inner tooth portion 8 is chamfered.

As for the dimensions of the inner tooth portion 8, for example, a pitch P1 is 5 mm (2.0 to 20 mm), a tooth height H1 is 1.2 mm (0.7 to 5 mm), a tooth root width W1 is 2.65 mm (1.5 to 10.15 mm), and a tooth angle β1 which is an angle between the two side faces 82 of the inner tooth portion 8 in the longitudinal direction of the belt is 40°.

### (Tooth Shape of Outer Tooth Portion 9)

As shown in FIGs. 2 and 3, the tooth shape of each outer tooth portion 9 is a shape called an STPD-tooth type. Each outer tooth portion 9 has a shape in which two side faces made of curved faces (circular arc faces) respectively are connected through a flat face. A tooth tip portion 91 of the outer tooth portion 9 has a flat face, and the two side faces 92 are both convex curved faces bulging outward. More in detail, each side face 92 has a shape in which two circular arcs are connected smoothly in a section including the longitudinal direction of the belt. Incidentally, a tooth root portion 93 of the outer tooth portion 9 is connected to a tooth bottom portion 94 through a curved face having a fixed curvature.

As for the dimensions of the outer tooth portion 9, for example, an arrangement pitch P2 of the outer tooth portions 9 is 5 mm (2.0 to 20 mm), which is the same as the arrangement pitch P1 of the inner tooth portions 8, a tooth height H2 is 1.91 mm (0.76 to 5.30 mm), and a tooth root width W2 is 3.25 mm (1.30 to 9.10 mm). The outer tooth portion 9 is larger than the inner tooth portion 8 in tooth height and in tooth root width. That is, the size of the outer tooth portion 9 is larger than the size of the inner tooth portion 8.

### (Method for Manufacturing Double-Side-Toothed Belt 6)

The aforementioned double-side-toothed belt 6 can be, for example, manufactured as follows.
1. The tooth cloth 10 is wound along the outer circumferential surface of a grooved mold. The tension member 7 is wound thereon spirally. Further an unvulcanized rubber sheet and the tooth cloth 10 are wound thereon. A belt molded body obtained thus is heated and pressurized to prepare an unvulcanized preliminary molded body.
2. The preliminary molded body taken out from the grooved mold is wound on two pulleys whose inter-axial distance can be adjusted. The preliminary molded body is pressurized by a press mold which consists of a pair of inner and outer toothed molds. Thus, inner tooth portions 8 and outer tooth portions 9 are formed. A site which has been vulcanized is moved, and next forming and vulcanizing for inner tooth portions 8 and outer tooth portions 9 are performed repeatedly.

### (Function and Effect)

As shown in FIG. 2, in the double-side-toothed belt 6 of the present embodiment, the inner tooth portions 8 and the outer tooth portions 9 are arranged at the same arrangement pitch, and the inner tooth portions 8 and the outer tooth portions 9 coincide as to their positions (center lines) in the longitudinal direction of the belt. However, the inner tooth portions 8 and the outer tooth portions 9 have different side face shapes. Specifically, as shown in FIGs. 2 and 3, the side face 82 of each inner tooth portion 8 is a flat face while the side face 92 of each outer tooth portion 9 is a convex curved face bulging outward. Since the side faces 92 of the outer tooth portions 9 are bulging convex curved faces, meshing is smooth when the pulley 5 rotates with the side faces 12 of the tooth grooves 11 of the pulley 5 in continuous contact with the curved side faces 92, in comparison with a case where the side faces 92 are flat faces. Thus, power can be smoothly transmitted on the outer circumferential side of the belt 6. As a result, it can be said that the transmission capacity on the outer circumferential side of the belt 6 is high because each outer tooth portion 9 has a curved face bulging outward. In fact, the transmission capacity of the outer tooth portion 9 is about twice as high as the transmission capacity of the inner tooth portion 8. That is, the double-side-toothed belt 6 of the embodiment is the best for a belt system in which power transmission is intended to be carried out efficiently particularly on the outer circumferential side of the belt.

In addition, as shown in FIG. 2, in the double-side-toothed belt 6 of the present embodiment, the inner tooth portions 8 and the outer tooth portions 9 have the same tooth pitch, and the inner tooth portions 8 and the outer tooth portions 9 coincide as to their positions (center lines) in the longitudinal direction of the belt. In this configuration, the positions of the tooth bottom portions 84 and 94, which are parts between the tooth portions 8 and parts between the tooth portions 9 respectively, also inevitably coincide in the inner and outer circumferences in the longitudinal direction of the belt. Thus, the bending rigidity of the belt decreases as a whole and the flexibility of the belt is improved so that the belt can be wound on pulleys 2 to 5 flexibly. Thus, the belt 6 meshes with the pulleys 2 to 5 smoothly when the belt 6 transmits power. As a result, the vibration in the belt 6 caused by the meshing of the belt 6 and the pulleys 2 to 5 is reduced to prevent the belt from deteriorating easily, and thus the durability of the belt 6 is improved.

In addition, as shown in FIGs. 2 and 3, in the double-side-toothed belt 6 of the present embodiment, the side faces 92 of the outer tooth portions 9 are convex curved faces bulging outward. Thus, the outer tooth portions 9 of the double-side-toothed belt 6 mesh with the tooth portions of the pulley 5 smoothly. Accordingly, a stress from the pulley 5 is hardly concentrated on the tooth root portions 93 in the outer tooth portions 9. Thus, a shearing stress on the outer tooth portions 9 can be reduced to improve the durability of the outer tooth portions 9.

In addition, owing to the smooth meshing of the outer tooth portions 9 and the pulley 5, tooth skipping hardly occurs in the outer tooth portions 9 during transmission of power.

In addition, owing to the smooth meshing of the outer tooth portions 9 and the pulley 5, vibration on the outer circumferential side of the belt 6 is so small that, on the outer circumferential side of the belt 6, the silence is enhanced, the velocity unevenness is reduced, and positioning with high accuracy can be attained. From above, the transmission capacity in the outer tooth portions 9 of the belt 6 can be enhanced.

In the double-side-toothed belt 6 of the present embodiment, the hardness of the rubber forming the inner tooth portions 8 and the hardness of the rubber forming the outer tooth portions 9 are equal to each other. Thus, one kind of rubber is prepared for manufacturing the belt 6. It is therefore possible to suppress the manufacturing cost of the belt 6.

In the aforementioned double-side-toothed belt 6 of the embodiment, the side faces 92 of the outer tooth portions 9 are convex curved faces bulging outward. Thus, the outer tooth portions 9 have higher transmission capacity than the inner tooth portions 8. When the belt 6 is used, various changes can be made on the belt system 1 as to layout and so on.

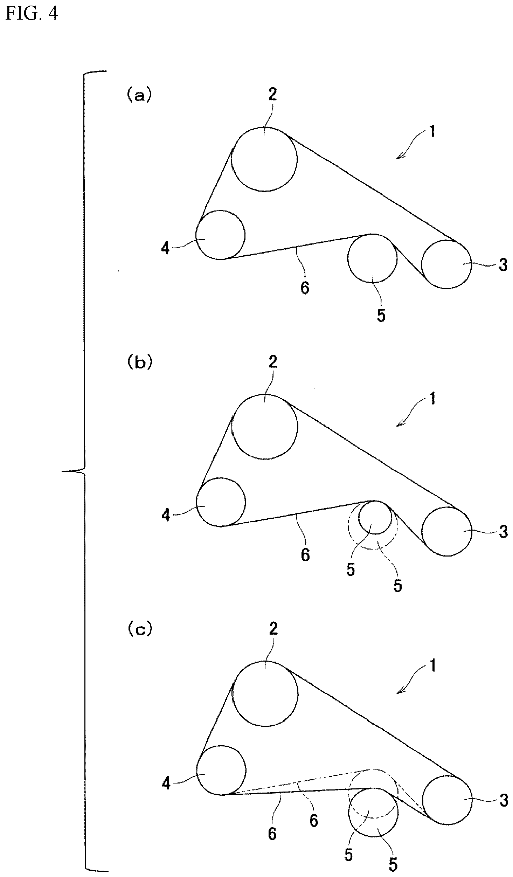

Owing to high transmission capacity per tooth in the outer tooth portions 9, desired power can be transmitted even if the number of teeth meshing between the outer tooth portions 9 and the pulley 5 is reduced. Accordingly, when the double-side-toothed belt 6 of the present embodiment is used, for example, in the belt system 1 as shown in (a) of FIG. 4, the diameter of the pulley 5 can be reduced to make the belt system compact as a whole as shown in (b) of FIG. 4. Thus, the cost regarding the belt system 1 can be reduced.

Alternatively, the position of the pulley 5 can be shifted outward as shown in (c) of FIG. 4. Accordingly, an internal space of the belt system 1 can be expanded so that another system-constituting member than system-constituting members of the belt system 1 can be disposed inside the belt system 1.

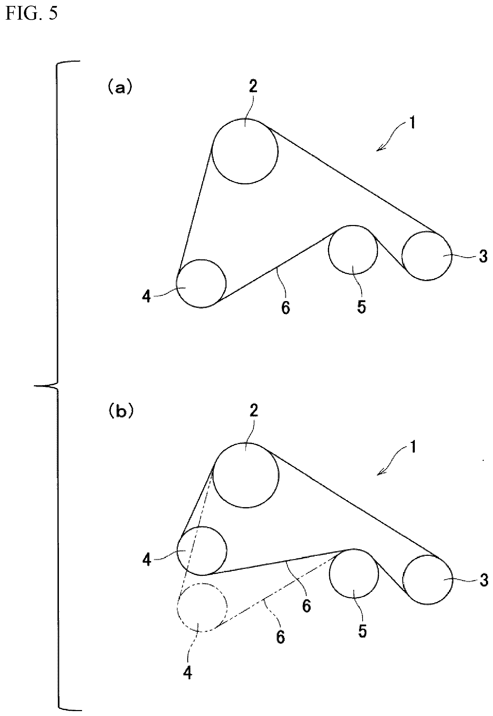

Alternatively, when the double-side-toothed belt 6 of the present embodiment is used in the belt system 1 as shown in (a) of FIG. 5, the position of the pulley 4 can be shifted inward as shown in (b) of FIG. 5. Accordingly, the belt system can be made compact as a whole. Thus, the cost regarding the belt system 1 can be reduced.

### (Modifications)

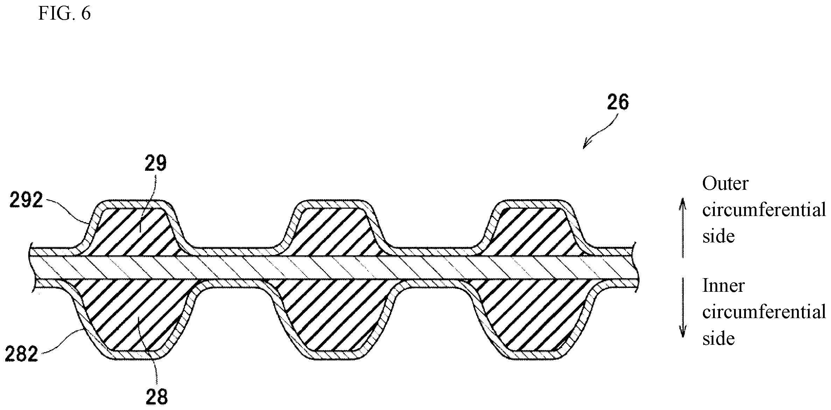

The shapes of the inner tooth portions 8 and the outer tooth portions 9 are not limited to the aforementioned ones in the embodiment, but may be changed desirably as follows.
(1) The convex curved face of each outer tooth portion 9 is not limited to the circular arc face. For example, it may be a part of a paraboloid, an elliptical arc face, or the like.
   The side face shapes of the tooth portions 8 and 9 are not limited to the combination of a flat face (inner tooth portion 8) and a convex curved face (outer tooth portion 9) as in the aforementioned embodiment.
(2) Both the side face of each inner tooth portion and the side face of each outer tooth portion may be curved faces while the two side faces may have different curvatures. The transmission capacities change in accordance with the difference between the curvatures of the curved faces.
(3) Both the side face of each inner tooth portion and the side face of each outer tooth portion may be flat faces while inclination angles with respect to the tooth bottom portions 84 and 94 (tension member 7) may be different.
(4) Although the tooth tip portions 81 and 91 of each inner tooth portion 8 and each outer tooth portion 9 in the aforementioned embodiment have flat faces, the tooth tip portions may have curved faces such as circular arc faces.
(5) Although the rubber forming the inner tooth portions 8 and the rubber forming the outer tooth portions 9 have the same hardness in the aforementioned embodiment, the rubbers forming the inner tooth portions and the outer tooth portions may be different in hardness.
(6) Although the side face 92 of each outer tooth portion 9 is formed into a convex curved face bulging outward and having high transmission capacity in the aforementioned embodiment, side face shapes of inner tooth portions 28 and outer tooth portions 29 may be contrary to those in the aforementioned embodiment, as shown in FIG. 6. Specifically, a side face 282 of each inner tooth portion 28 may be a circular arc face while a side face 292 of each outer tooth portion 29 may be a flat face. When the tooth shapes of the inner and outer tooth portions 28 and 29 are made contrary to those in the aforementioned embodiment, the transmission capacity in the inner tooth portions 28 can be enhanced.

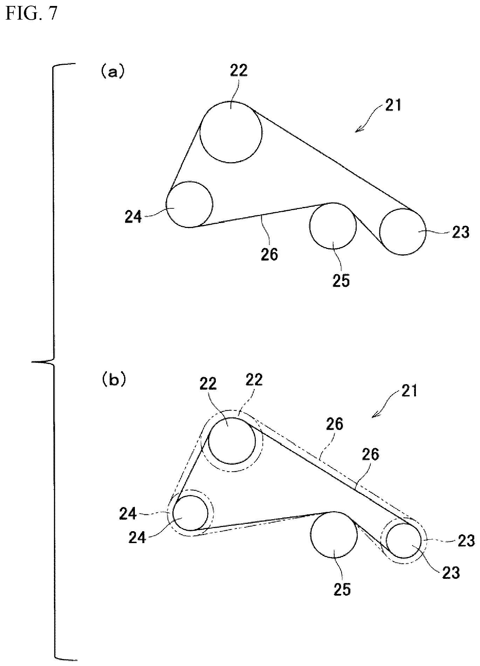

As shown in FIG. 6, in a double-side-toothed belt 26 of this modification, the inner tooth portions 28 and the outer tooth portions 29 have the same arrangement pitch, and the inner tooth portions 28 and the outer tooth portions 29 coincide as to positions in the longitudinal direction of the belt, while the inner tooth portions 28 and the outer tooth portions 29 have different side face shapes. Specifically, as shown in FIG. 6, the side face 282 of each inner tooth portion 28 is a convex curved face bulging outward, while the side face 292 of each outer tooth portion 29 is a flat face. Since the side faces 282 of the inner tooth portions 28 are bulging convex curved faces, meshing is smooth when pulleys 22 to 24 rotates with side faces of tooth grooves of the pulleys 22 to 24 in continuous contact with the curved side faces 282 as shown in FIGs. 6 and 7, in comparison with a case where the side faces 282 are flat faces. Thus, power can be smoothly transmitted on the inner circumferential side of the belt 26. As a result, it can be said that the transmission capacity on the inner circumferential side of the belt 26 is high because each inner tooth portion 28 has a curved face bulging outward. In fact, the transmission capacity of the inner tooth portions 28 is about twice as high as the transmission capacity of the outer tooth portions 29. That is, the double-side-toothed belt 26 of the modification is the best for a belt system in which power transmission is intended to be carried out efficiently particularly on the inner circumferential side of the belt.

Owing to high transmission capacity per tooth in the inner tooth portions 28, desired power can be transmitted even if the number of teeth meshing between the inner tooth portions 28 and the pulleys 22 to 24 is reduced. Accordingly, when the double-side-toothed belt 26 of the modification is used, for example, in a belt system 21 as shown in (a) of FIG. 7, the diameters of the pulleys 22 to 24 can be reduced to make the belt system compact as a whole as shown in (b) of FIG. 7. Thus, the cost regarding the belt system 21 can be reduced.

### EXAMPLES

Next, double-side-toothed belts of Examples 1 and 2 and Comparative Examples 1 and 2 were prepared and compared as to their transmission capacities, and belt durability running tests were performed thereon.

### (Configuration of Belts)

In the double-side-toothed belts (test piece) of Examples 1 and 2 and Comparative Examples 1 and 2, pitches of inner tooth portions and the outer tooth portions, and tooth shapes of the inner tooth portions and the outer tooth portions had configurations shown in Table 1. Table 1 also shows tooth heights and tooth root widths of the inner tooth portions and the outer tooth portions in each belt (test piece).

**Table 1**

| | Ex. 1 | Ex. 2 | Comparative Ex. 1 | Comparative Ex. 2 |
|---|---|---|---|---|
| Pitch of inner tooth portions (P1) (mm) | 5 | 5 | 5 | 5 |
| Tooth shape of inner tooth portions | tooth type T5 | tooth type S5M | tooth type T5 | tooth type T5 |
| Tooth height of inner tooth portions (mm) | 1.2 | 1.91 | 1.2 | 1.2 |
| Tooth root width of inner tooth portions (mm) | 2.65 | 3.25 | 2.65 | 2.65 |
| Pitch of outer tooth portions (P2) (mm) | 5 | 5 | 5 | 2 |
| Tooth shape of outer tooth portions | tooth type S5M | tooth type T5 | tooth type T5 | tooth type S2M |
| Tooth height of outer tooth portions (mm) | 1.91 | 1.2 | 1.2 | 0.76 |
| Tooth root width of outer tooth portions (mm) | 3.25 | 2.65 | 2.65 | 1.30 |

As for the other common items, each double-side-toothed belt (test piece) had configurations as follows.
(1) Belt width: 10 mm
(2) Belt circumferential length: 385 mm
(3) Tension member: Dimensions of a tension member are shown in Table 2. In addition, the composition of an RFL solution used for a bonding treatment on the tension member is shown in Table 3.

**Table 2**

| Material | E-glass fiber |
|---|---|
| Filament diameter (µm) | 9 |
| Twisting configuration | 3/6 |
| Twisting method | organzine |
| Wire diameter of tension member (mm) | 0.8 |
| Bonding treatment | treatment with RFL solution |

**Table 3**

| | parts by mass |
|---|---|
| Resorcin | 1.35 |
| Formalin (solid concentration: 37%)) | 1 |
| Vinyl pyridine latex (solid concentration: 40%) | 130 |
| Water | 50 |

(4) Composition of rubber material (unvulcanized rubber sheet) forming tooth portions: Shown in Table 4. The rubber material forming the tooth portions was a rubber composition having chloroprene rubber as its main component.

**Table 4**

| Blended ingredient | Blended amount [parts by weight] |
|---|---|
| Chloroprene | 100 |
| Magnesium oxide | 4 |
| Accelerator *1 | 1 |
| Stearic acid | 1 |
| Anti-aging agent | 3 |
| Carbon black | 40 |
| Oil | 10 |
| Zinc oxide | 5 |
| Total | 164 |

| | |
|---|---|
| *1 Dibenzothiazyldisulfide | |

(5) Rubber hardness of tooth portions (according to JIS K6253: 2012): About 75 in durometer A hardness.
(6) Tooth cloth: The configuration of the tooth cloth is shown in Table 5. A tooth cloth A was used for each of the belt inner circumferential side and the belt outer circumferential side in each of Examples 1 and 2 and Comparative Example 1. In Comparative Example 2, the tooth cloth A was used for the belt inner circumferential side, and a tooth cloth B was used for the belt outer circumferential side.

**Table 5**

| | tooth cloth A | tooth cloth B |
|---|---|---|
| Material of warps | nylon 6 | nylon 6 |
| Material of wefts | woolly nylon 6 *1 | woolly nylon 6 *1 |
| Fabric configuration | twill-woven | twill-woven |
| Bonding treatment | treatment (dipping) with RFL solution | treatment (dipping) with RFL solution |
| Thickness (mm) *2 | about 0.2 | about 0.1 |

*1 partially using urethane elastic yarns having flexibility
*2 thickness of tooth cloth after vulcanization of preliminary molded body

### (Method for Manufacturing Belts)

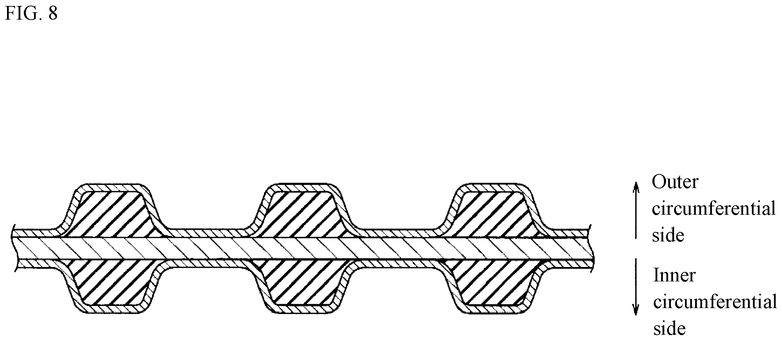

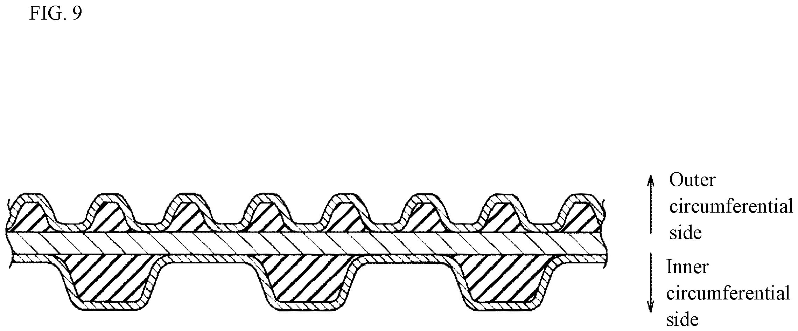

(1) The double-side-toothed belts (test pieces) of Examples 1 and 2 and Comparative Examples 1 and 2 having the aforementioned configurations were prepared in the aforementioned procedure described in the embodiment. Vulcanization was performed by heating and pressurizing each preliminary molded body at 165°C (in surface temperature of a press mold) and in a surface pressure of 5.0 MPa for 20 minutes.
(2) Partial enlarged sectional views of the double-side-toothed belts (test pieces) prepared thus, at their sections including the longitudinal directions of the belts are shown in FIG. 2 for Example 1, FIG. 6 for Example 2, FIG. 8 for Comparative Example 1, and FIG. 9 for Comparative Example 2.

### (Belt System)

A belt system for evaluating the Examples and Comparative Examples was the same as the aforementioned belt system 1 described in the embodiment, and a schematic configuration view thereof was substantially the same as that of FIG. 1.

Here, Table 6 shows the number of teeth and the pitch diameter in each pulley. Incidentally, the number of teeth meshing with the belt in each pulley is secured to be 6 or more in any example.

**Table 6**

| | Ex. 1 | Ex. 2 |
|---|---|---|
| Belt (Pitches of tooth portions) | | |
| Pitch of inner tooth portions (P1) (mm) | 5 | 5 |
| Pitch of outer tooth portions (P2) (mm) | 5 | 5 |
| (Tooth shapes) | | |
| Tooth shape of inner tooth portions | tooth type T5 | tooth type S5M |
| Tooth shape of outer tooth portions | tooth type S5M | tooth type T5 |
| (Rubber hardness of tooth portions) | | |
| Rubber hardness of inner tooth portions; durometer A hardness | about 75 | about 75 |
| Rubber hardness of outer tooth portions; durometer A hardness | about 75 | about 75 |

| Belt system | | |
|---|---|---|
| Driving timing pulley (belt inner circumferential side) | 18 teeth, pitch diameter of 28.65 mm | 18 teeth, pitch diameter of 28.65 mm |
| Driven timing pulley (belt inner circumferential side) | 16 teeth, pitch diameter of 25.46 mm | 16 teeth, pitch diameter of 25.46 mm |
| Idle timing pulley (belt inner circumferential side) | 16 teeth, pitch diameter of 25.46 mm | 16 teeth, pitch diameter of 25.46 mm |
| Driven timing pulley (belt outer circumferential side) | 16 teeth, pitch diameter of 25.46 mm | 16 teeth, pitch diameter of 25.46 mm |

| Table 6 (continued) | | |
|---|---|---|
| | Ex. 1 | Ex. 2 |
| Evaluation results | | |
| 1. Transmission capacities in inner and outer circumferences of belt | | |
| Transmission capacity of inner tooth portions (per 10 mm of belt width) | 183 W (index 100) | 367 W (index 201) |
| Transmission capacity of outer tooth portions (per 10 mm of belt width) | 367 W (index 201) | 183 W (index 100) |
| *Rotation speed of small pulley: 1800 rpm | | |

| 2. Belt durability running test | | |
|---|---|---|
| trouble of belt during running | none | none |
| belt tension retention rate | 70% | 70% |

| *Running conditions | | |
|---|---|---|
| Mounting tension | 68 N | 68 N |
| Load | 183 W | 183 W |
| Rotation speed (driving shaft) | 1600 rpm | 1600 rpm |
| Rotation speed (driven shaft) | 1800 rpm | 1800 rpm |
| Number of bending | 50 million times | 50 million times |
| Atmospheric temperature | 23°C | 23°C |
| Evaluation (judgement) | A | A |

**Table 6 (continued)**

| | Comparative Ex. 1 | Comparative Ex. 2 |
|---|---|---|
| Belt | | |
| (Pitches of tooth portions) | | |
| Pitch of inner tooth portions (P1) (mm) | 5 | 5 |
| Pitch of outer tooth portions (P2) (mm) | 5 | 2 |
| (Tooth shapes) | | |
| Tooth shape of inner tooth portions | tooth type T5 | tooth type T5 |
| Tooth shape of outer tooth portions | tooth type T5 | tooth type S2M |
| (Rubber hardness of tooth portions) | | |
| Rubber hardness of inner tooth portions; durometer A hardness | about 75 | about 75 |
| Rubber hardness of outer tooth portions; durometer A hardness | about 75 | about 75 |
| Belt system | | |
| Driving timing pulley (belt inner circumferential side) | 18 teeth, pitch diameter of 28.65 mm | 18 teeth, pitch diameter of 28.65 mm |
| Driven timing pulley (belt inner circumferential side) | 16 teeth, pitch diameter of 25.46 mm | 16 teeth, pitch diameter of 25.46 mm |
| Idle timing pulley (belt inner circumferential side) | 16 teeth, pitch diameter of 25.46 mm | 16 teeth, pitch diameter of 25.46 mm |
| Driven timing pulley (belt outer circumferential side) | 16 teeth, pitch diameter of 25.46 mm | 40 teeth, pitch diameter of 25.46 mm |

| | Comparative Ex. 1 | Comparative Ex. 2 |
|---|---|---|
| Evaluation results | | |
| 1. Transmission capacities in inner and outer | | |
| circumferences of belt | | |
| Transmission capacity of inner tooth portions (per 10 mm of belt width) | 183 W (index 100) | 183 W (index 100) |
| Transmission capacity of outer tooth portions (per 10 mm of belt width) | 183 W (index 100) | 204 W (index 111) |
| *Rotation speed of small pulley: 1800 rpm | | |

| 2. Belt durability running test | | |
|---|---|---|
| trouble of belt during running | none | none |
| belt tension retention rate | 65% | 10% |

| *Running conditions | | |
|---|---|---|
| Mounting tension | 43 N | 43 N |
| Load | 183 W | 183 W |
| Rotation speed (driving shaft) | 1600 rpm | 1600 rpm |
| Rotation speed (driven shaft) | 1800 rpm | 1800 rpm |
| Number of bending | 50 million times | 50 million times |
| Atmospheric temperature | 23°C | 23°C |
| Evaluation (judgement) | B | B |

### (Evaluation Method)

### 1. Transmission Capacities in Inner and Outer Circumferences of Belt

The transmission capacity of the inner tooth portions and the transmission capacity of the outer tooth portions were read from an annexed table (reference transmission capacity table for each tooth type) described as reference (way to use general toothed belt) in Japanese Industrial Standard JIS K6372: 1995 (general toothed belt). This annexed table was established based on an expression (corresponding to Expression 7 in Clause 3.3.1 in the same Standard) for calculating "transmission capacity of belt". Here, the rotation speed of a small pulley to be read out was set at 1,800 rpm corresponding to a running condition in a durability running test which will be described later. Results of transmission capacity in the inner tooth portions and transmission capacity in the outer tooth portions which are read out from the annexed table are shown in Table 6. An index in a case of regarding the transmission capacity of tooth portions having a tooth type T5 as 100 is also written in parentheses.

### 2. Belt Durability Running Test

A belt durability running test was performed in the layout shown in FIG. 1 and on running conditions shown in Table 6 by use of each of the double-side-toothed belts (test pieces) of Examples 1 and 2 and Comparative Examples 1 and 2. Prior to the test, belt tension before running was measured by a sonic tensiometer (tradename "Doctor Tension Type IV" made by Mitsuboshi Belting Ltd.). Then, the belt durability running test was started, and belt tension after the running (immediately after reaching the number of bending shown in Table 6 and stopping the running) was measured again. Table 6 shows a result of calculating a value of a belt tension retention rate from the tensions of each belt before and after the running. The higher value of the belt tension retention rate indicates that the meshing performance between the belt and the pulleys during transmission of power and the bending fatigue resistance of the tension member are more excellent. In addition, problems of the belt in running were observed. When a problem such as tooth chipping, cracking in a tooth root portion, jumping, etc. occurred, the phenomenon of the problem was written.

### (Evaluation Results)

Transmission capacities in the inner and outer circumferences of each belt and evaluation results of the belt durability running test are shown in Table 6. Each belt was evaluated (judged) as A or B described below.

That is, in the case where a difference in transmission capacity could be provided between the inner and outer circumferences of the belt and the belt tension retention rate was 63% or higher without any problem in the belt as a result of the belt durability running test, the belt was regarded as capable of being applied to a synchronous transmission belt system having different transmission capacities in the inner and outer circumferences of the belt while securing the meshing performance between the belt and pulleys during transmission of power and the durability of the belt. Thus, such a belt was evaluated as A.

In the case where a difference in transmission capacity could not be provided between the inner and outer circumferences of the belt, or as a result of the belt durability running test there was a problem in the belt or the belt tension retention rate was less than 63% though there was no problem in the belt, the belt was not regarded as capable of being applied to a synchronous transmission belt system having different transmission capacities in the inner and outer circumferences of the belt while securing the meshing performance between the belt and pulleys during transmission of power and the durability of the belt. Thus, such a belt was evaluated as B.

According to the evaluation results in Table 6, each Example 1 and 2 had no problem as to the belt tension retention rate after the durability running, and had excellent meshing performance between the belt and pulleys during transmission of power and excellent bending fatigue resistance in the tension member without any problem in the belt, resulting in an excellent belt durability.

As for Example 1, it is estimated that this is because power transmission could be carried out efficiently particularly on the outer circumferential side of the belt owing to the transmission capacity (367 W) of the outer tooth portions (tooth type S5M) about twice as high as the transmission capacity (183 W) of the inner tooth portions (tooth type T5). As for Example 2, it is estimated that this is because power transmission could be carried out efficiently particularly on the inner circumferential side of the belt owing to the transmission capacity (367 W) of the inner tooth portions (tooth type S5M) about twice as high as the transmission capacity (183 W) of the outer tooth portions (tooth type T5).

The belt of Comparative Example 1 was a conventional typical double-side-toothed belt, in which tooth portions each having a tooth shape (tooth type T5) not so smooth in meshing performance with pulleys and not so large in transmission capacity (183 W) were provided in the inner and outer circumferences of the belt while a difference in transmission capacity could not be provided between the inner and outer circumferences of the belt. Accordingly, it was estimated that power transmission could not be carried out on the inner circumferential side of the belt or on the outer circumferential side of the belt as efficiently as in Example 1 or 2. As for the durability of the belt, there was no defect in meshing performance with the pulleys under the running conditions, resulting in no practical problem.

Comparative Example 2 had the poorest result as to the durability of the belt under the running conditions. It is estimated that this was caused as follows. That is, each outer tooth portion was formed into a tooth shape (tooth type S2M) large in transmission capacity (index 111) and smooth in meshing with pulleys, in comparison with each inner tooth portion (tooth type T5). However, due to a difference in pitch between the inner tooth portions and the outer tooth portions, the positions of the inner tooth portions and the positions of the outer tooth portions did not always coincide in the longitudinal direction of the belt. Therefore, correspondingly to an increase in bending rigidity of the belt as a whole, the meshing performance between the belt and the pulleys deteriorated so that the bending fatigue resistance of the tension member deteriorated.

The present invention has been described in detail and with reference to its specific embodiment. However, it is obvious for those in the art that various modifications or changes can be made without departing from the scope as in the apended claims.

### REFERENCE SIGNS LIST

- 1: belt system
- 2-5: pulley
- 6: double-side-toothed belt
- 7: tension member
- 8: inner tooth portion
- 9: outer tooth portion
- 10: tooth cloth

## Claims

1. A double-side-toothed belt (6) comprising:
a plurality of inner tooth portions (8) arranged on an inner circumferential side of the belt at a predetermined pitch in a longitudinal direction of the belt; and
a plurality of outer tooth portions (9) arranged on an outer circumferential side of the belt at a predetermined pitch in the longitudinal direction of the belt, wherein
the pitch of the inner tooth portions (8) and the pitch of the outer tooth portions (9) are equal to each other, and positions of the inner tooth portions (8) and positions of the outer tooth portions (9) coincide in the longitudinal direction of the belt,
wherein a hardness of a rubber forming the inner tooth portions and a hardness of a rubber forming the outer tooth portions (9) are equal to each other,
**characterized in that**
the inner tooth portions (8) have side faces of flat faces and the outer tooth portions (9) have side faces each of which is a curved face including a circular arc face bulging outward,
the outer tooth portions (9) have a transmission capacity higher than a transmission capacity of the inner tooth portions (8), and
the side faces of each outer tooth portion (9) are respectively connected through a flat face.

2. The double-side-toothed belt (6) according to claim 1, wherein each of the side faces of the outer tooth portions (9) has a face shape in which a plurality of circular arc faces are combined.

## Patentansprüche

1. Doppelseitig Zahnriemen (6), umfassend:
eine Vielzahl von inneren Zahnabschnitten (8), die auf einer inneren Umfangsseite des Riemens mit einer vorbestimmten Teilung in einer Längsrichtung des Riemens angeordnet sind; und
eine Vielzahl von äußeren Zahnabschnitten (9), die auf einer äußeren Umfangsseite des Riemens mit einer vorbestimmten Teilung in der Längsrichtung des Riemens angeordnet sind, wobei
die Teilung der inneren Zahnabschnitte (8) und die Teilung der äußeren Zahnabschnitte (9) einander gleich sind und die Positionen der inneren Zahnabschnitte (8) und die Positionen der äußeren Zahnabschnitte (9) in der Längsrichtung des Riemens übereinstimmen,
wobei eine Härte eines Gummis, das die inneren Zahnabschnitte bildet, und eine Härte eines Gummis, das die äußeren Zahnabschnitte (9) bildet, einander gleich sind,
**dadurch gekennzeichnet, dass**
die inneren Zahnabschnitte (8) Seitenflächen aus flachen Flächen aufweisen und die äußeren Zahnabschnitte (9) Seitenflächen aufweisen, von denen jede eine gekrümmte Fläche ist, die eine nach außen gewölbte Kreisbogenfläche einschließen,
die äußeren Zahnabschnitte (9) eine höhere Übertragungskapazität aufweisen als die inneren Zahnabschnitte (8), und
die Seitenflächen jedes äußeren Zahnabschnitts (9) jeweils durch eine ebene Fläche verbunden sind.

2. Doppelseitiger Zahnriemen (6) nach Anspruch 1, wobei jede der Seitenflächen der äußeren Zahnabschnitte (9) eine Flächenform aufweist, in der eine Vielzahl von Kreisbogenflächen kombiniert sind.

## Revendications

1. Courroie (6) crantée à double face comprenant :
une pluralité de parties (8) de dent interne agencées sur un côté circonférentiel interne de la courroie à un pas prédéterminé dans une direction longitudinale de la courroie ; et
une pluralité de parties (9) de dent externe agencées sur un côté circonférentiel externe de la courroie à un pas prédéterminé dans la direction longitudinale de la courroie, dans laquelle
le pas des parties (8) de dent interne et le pas des parties (9) de dent externe sont égaux l'un à l'autre, et des positions des parties (8) de dent interne et des positions des parties (9) de dent externe coïncident dans la direction longitudinale de la courroie,
dans laquelle une dureté d'un caoutchouc formant les parties de dent interne et une dureté d'un caoutchouc formant les parties (9) de dent externe sont égales l'une à l'autre,
**caractérisée en ce que**
les parties (8) de dent interne présentent des faces latérales de faces plates et les parties (9) de dent externe présentent des faces latérales dont chacune est une face incurvée incluant une face d'arc circulaire bombée vers l'extérieur,
les parties (9) de dent externe présentent une capacité de transmission supérieure à une capacité de transmission des parties (8) de dent interne, et
les faces latérales de chaque partie (9) de dent externe sont respectivement reliées par l'intermédiaire d'une face plate.

2. Courroie (6) crantée à double face selon la revendication 1, dans laquelle chacune des faces latérales des parties (9) de dent externe présente une forme de face dans laquelle une pluralité de faces d'arc circulaire sont combinées.
